# EUROPEAN PATENT APPLICATION

(11) **EP 2 595 375 A1**
(43) Date of publication of application: **22.05.2013**
(21) Application number: 12191782.7
(22) Date of filing: 08.11.2012
(51) Int. Cl.: H04N 5/235

(54) **Image processing apparatus and image processing method**

(30) Priority: 18.11.2011 JP 2011252802
(71) Applicant: Keyence Corporation, Osaka-shi, Osaka 533-8555 (JP)
(72) Inventor: Katsurada, Masaaki, Osaka, 533-8555 (JP); Nagoshi, Keisuke, Osaka, 533-8555 (JP)
(74) Representative: HOFFMANN EITLE

(57) **Abstract**

Provided is an image processing apparatus which can prevent deterioration in defect detection accuracy. The image processing apparatus includes an imaging unit and an image processing unit. The imaging unit converts a color image imaged by the imaging element to an HDR image based on a conversion characteristic for expanding a dynamic range, to output the HDR image. The image processing unit inversely converts color component values with respect to each pixel of the HDR image outputted from the imaging unit, based on the conversion characteristic, calculates brightness and a ratio of the color component values with respect to each pixel from the inversely converted color component values, and converts the calculated brightness based on the conversion characteristic, to generate a post-correction HDR image based on a ratio of the converted brightness and the calculated color component values.

## Description

### BACKGROUND OF THE INVENTION

### 1. Field of the Invention

The present invention relates to an image processing apparatus which can accurately reproduce a chroma, a hue, and the like of a surface of an inspection object and prevent deterioration in defect detection accuracy, and an image processing method and a computer program which are executed by the image processing apparatus.

### 2. Description of Related Art

In the case of executing a visual inspection of an inspection object, when an inspection object with a large contrast is imaged, there may occur overexposure in a high-intensity region of the imaged image and underexposure in a low-intensity region thereof. In order to avoid occurrence of the overexposure and the underexposure in the image, HDR processing has been performed to execute an image inspection of the inspection object.

As typical HDR processing, for example, a plurality of images with different exposure times are imaged, and based on the plurality of imaged images, a synthetic image having a dynamic range wider than that of a light receiving element is generated as an HDR image.

In the case of generating the HDR image, a plurality of images imaged on a plurality of different exposure conditions are synthesized, to generate a multiple-tone synthetic image as the HDR image. There has thus been a problem in that considerable time is required for generating the HDR image, making it difficult to reduce inspection cycle time.

Further, in order to reduce the time for generating the HDR image as much as possible, there has been considered a method for gradually changing an upper value of a light receiving signal within a plurality of different times in one imaging, to generate an HDR image similar to that generated in the case of imaging for a plurality of times. However, in the case of generating the HDR image, the overall image becomes grayish since pixels with higher brightness has smaller pixel values, and the image is faded due to a decreased chroma.

As opposed to this, techniques for correcting the chroma with respect to the HDR image has also be disclosed (Japanese Unexamined Patent Publication Nos. 2000-023183 and H07-046605). However, both are techniques for correcting the chroma with respect to the HDR image, and not techniques for accurately reproducing (re-creating) a chroma, a hue, and the like before generation of the HDR image.

### SUMMARY OF THE INVENTION

The present invention has been made in view of such circumstances, and an object thereof is to provide an image processing apparatus which can accurately reproduce a chroma, a hue, and the like of a surface of an inspection object and prevent deterioration in defect detection accuracy, and an image processing method and a computer program which are executed by the image processing apparatus.

In order to achieve the above object, according to one embodiment of the invention, an image processing apparatus includes: an imaging unit (an imaging portion) having an imaging element for imaging an inspection object; and an image processing unit (an imaging processing portion) for executing image processing on image data captured (acquired) by the imaging unit, wherein the imaging unit converts a color image imaged by the imaging element to an HDR image based on a conversion characteristic for expanding a dynamic range, to output the HDR image, and the image processing unit includes an inverse conversion portion for inversely converting color component values with respect to each pixel of the HDR image, outputted from the imaging unit, based on the conversion characteristic, a calculation portion for calculating brightness and a ratio of the color component values with respect to each pixel, from the inversely converted color component values, and a post-correction HDR image generating portion for converting the calculated brightness based on the conversion characteristic, to generate a post-correction HDR image based on a ratio of the converted brightness and the calculated color component values.

Further, according to another embodiment of the invention, in the image processing apparatus according to the first aspect, the calculation portion calculates a maximum value of the color component values as the brightness, and the post-correction HDR image generating portion converts the brightness calculated with respect to each pixel based on the conversion characteristic, and multiplies the calculated ratio of the color component values by the converted brightness, to generate the post-correction HDR image.

Further, according to still another embodiment of the invention, in the image processing apparatus according to the first or second aspect, the image processing unit includes a white balance adjusting portion for multiplying the color component values with respect to each pixel of the HDR image, inversely converted by the inverse conversion portion, by gains for adjusting white balance.

Further, according to still another embodiment of the invention, the image processing apparatus according to any one of the first to third aspects includes a switching portion for switching between whether or not to convert the HDR image in the imaging unit.

Next, in order to achieve the above object, according to still another embodiment of the invention, there is provided an image processing method executed by an image processing apparatus, the apparatus including: an imaging unit having an imaging element for imaging an inspection object; and an image processing unit for executing image processing on image data acquired by the imaging unit, wherein the imaging unit converts a color image imaged by the imaging element to an HDR image based on a conversion characteristic for expanding a dynamic range, to output the HDR image, and the image processing unit inversely converts color component values with respect to each pixel of the HDR image outputted from the imaging unit, based on the conversion characteristic, calculates brightness and a ratio of the color component values with respect to each pixel from the inversely converted color component values, and converts the calculated brightness based on the conversion characteristic, to generate a post-correction HDR image based on a ratio of the converted brightness and the calculated color component values.

Further, according to still another embodiment of the invention, in the image processing method according to the fifth aspect, a maximum value of the color component values is calculated as the brightness, the brightness calculated with respect to each pixel is converted based on the conversion characteristic, and the calculated ratio of the color component values is multiplied by the converted brightness, to generate the post-correction HDR image.

Further, according to still another embodiment of the invention, in the image processing method according to the fifth or sixth aspect, the image processing unit multiplies the color component values with respect to each pixel of the inversely converted HDR image by gains for adjusting white balance.

Further, according to still another embodiment of the invention, in the image processing method according to any one of the fifth to seventh aspects, switching between whether or not to convert the HDR image in the imaging unit is made.

Next, in order to achieve the above object, according to still another embodiment of the invention, there is provided a computer program executed by an image processing apparatus, the apparatus including: an imaging unit having an imaging element for imaging an inspection object; and an image processing unit for executing image processing on image data acquired by the imaging unit, wherein the imaging unit is caused to function as a unit for converting a color image imaged by the imaging element to an HDR image based on a conversion characteristic for expanding a dynamic range, to output the HDR image, and the image processing unit is caused to function as an inverse conversion unit for inversely converting color component values with respect to each pixel of the HDR image, outputted from the imaging unit, based on the conversion characteristic, a calculation unit for calculating brightness and a ratio of the color component values with respect to each pixel, from the inversely converted color component values, and a post-correction HDR image generating unit for converting the calculated brightness based on the conversion characteristic, to generate a post-correction HDR image based on a ratio of the converted brightness and the calculated color component values.

Further, according to still another embodiment of the invention, in the computer program according to the ninth aspect, the calculation unit is caused to function as a unit for calculating a maximum value of the color component values as the brightness, and the post-correction HDR image generating unit is caused to function as a unit for converting the brightness calculated with respect to each pixel based on the conversion characteristic, and multiplying the calculated ratio of the color component values by the converted brightness, to generate the post-correction HDR image.

Further, according to still another embodiment of the invention, in the computer program according to the ninth or tenth aspect, the image processing unit is caused to function as a unit for multiplying the color component values with respect to each pixel of the inversely converted HDR image, by gains for adjusting white balance white balance adjusting portion for multiplying the color component values with respect to each pixel of the HDR image, inversely converted by the inverse conversion portion, by gains for adjusting white balance.

In the first, fifth, and ninth aspects, the imaging unit converts a color image imaged by the imaging element to an HDR image based on a conversion characteristic for expanding a dynamic range, to output the HDR image. The image processing unit inversely converts color component values with respect to each pixel of the HDR image outputted from the imaging unit, based on the conversion characteristic, and calculates brightness and a ratio of the color component values with respect to each pixel from the inversely converted color component values. The calculated brightness is converted based on the conversion characteristic, to generate a post-correction HDR image based on a ratio of the converted brightness and the calculated color component values. Since a chroma and a hue of the generated post-correction HDR image are almost the same as a chroma and a hue of the imaged color image, it is possible to correct only the brightness, so as to suppress deterioration in image quality. Further, it is possible to suppress deterioration in image quality despite generation of an HDR image in one imaging of the color image similar to that in the case of imaging for a plurality of times with a plurality of different exposure times, and also possible to reduce an amount of data communication between the imaging unit and the image processing unit, to thereby reduce the inspection cycle time.

In the second, sixth, and tenth aspects, a maximum value of the color component values is calculated as the brightness, the brightness calculated with respect to each pixel is converted based on the conversion characteristic, and the calculated ratio of the color component values is multiplied by the converted brightness, to generate a post-correction HDR image. Accordingly, since the chroma and the hue of the generated post-correction HDR image are almost the same as the chroma and the hue of the imaged color image, it is possible to correct only the brightness, so as to suppress deterioration in image quality.

In the third, seventh, and eleventh aspects, the color component values with respect to each pixel of the inversely converted HDR image are multiplied by gains for adjusting white balance, thereby allowing suppression of change in color at the time of adjusting white balance. More specifically, when white balance adjustment is executed on the HDR image outputted from the imaging unit, a hue of the image may change. However, as in the present invention, by executing white balance adjustment on the HDR image inversely converted by the inverse conversion portion, a change in tone of color at the time of adjusting white balance can be suppressed.

In the fourth and eighth aspects, switching between whether or not to convert the HDR image in the imaging unit can be made, thus making it possible to switch so as not to generate the HDR image when halation does not occur in the case of imaging the inspection object. As a result, an arithmetic processing load can be alleviated as a whole.

In the present invention, since the chroma and the hue of the generated post-correction HDR image are almost the same as the chroma and the hue of the imaged color image, only the brightness can be corrected, and deterioration in image quality can be suppressed. Further, it is possible to suppress deterioration in image quality despite generation of an HDR image in one imaging of the color image similar to that in the case of imaging for a plurality of times with a plurality of different exposure times, and it is also possible to reduce an amount of data communication between the imaging unit and the image processing unit, to thereby reduce the inspection cycle time.

### BRIEF DESCRIPTION OF THE DRAWINGS

Fig. 1 is a schematic view showing a configuration of an image processing sensor according to an embodiment of the present invention;
Figs. 2A to 2C are outline views showing a configuration of an imaging device of the image processing sensor according to the embodiment of the present invention;
Fig. 3 is a block diagram showing a hardware configuration of the imaging device of the image processing sensor according to the embodiment of the present invention;
Fig. 4 is a front view showing a configuration of a display device of the image processing sensor according to the embodiment of the present invention;
Figs. 5A and 5B are exemplary views of mode switching screens in the display device of the image processing sensor according to the embodiment of the present invention;
Figs. 6A to 6F are exemplary views of setting screens in the display device of the image processing sensor according to the embodiment of the present invention;
Fig. 7 is a function block diagram of the imaging device of the image processing sensor according to the embodiment of the present invention;
Fig. 8 is an exemplary view of a conversion characteristic for expanding a dynamic range;
Figs. 9A to 9C are views showing changes in state of a color image imaged by the imaging device;
Fig. 10 is a flowchart showing a procedure for an FPGA of a main substrate in the imaging device of the image processing sensor according to the embodiment of the present invention;
Fig. 11 is a function block diagram of the imaging device of the image processing sensor according to the embodiment of the present invention in the case of adjusting white balance; and
Fig. 12 is a flowchart showing a procedure for an FPGA of a main substrate in the imaging device of the image processing sensor according to the embodiment of the present invention in the case of adjusting the white balance.

### DETAILED DESCRIPTION OF PREFERRED EMBODIMENTS

Hereinafter, an image processing apparatus according to an embodiment of the present invention will be described with reference to the drawings. It is to be noted that elements having the same or similar configurations or functions throughout the drawings referenced in descriptions of the present embodiment are provided with the same or similar reference numerals, and detailed descriptions thereof are omitted. Hereinafter, descriptions will be given, taking as an example an image processing sensor as an image processing apparatus.

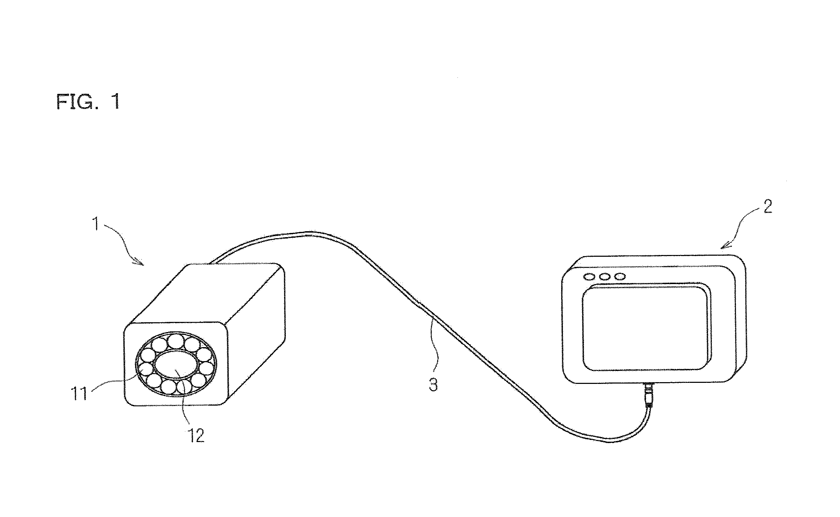

Fig. 1 is a schematic view showing a configuration of an image processing sensor according to an embodiment of the present invention. As shown in Fig. 1, the image processing sensor according to the present embodiment is configured by an imaging device 1 and a display device 2 connected with the imaging device 1 through a connection cable 3 in a data communicable manner. Needless to say, the image processing sensor may be an external computer having a display in place of the display device 2. The imaging device 1 and the display device 2 may be integrally formed.

The imaging device 1 includes therein an FPGA, DSP, and the like which execute image processing, and includes a camera module (imaging unit) having an imaging element for imaging an inspection object, and an illumination part for irradiating the inspection object with light. In order to make the imaging device 1 compact, for example, as shown in Fig. 1, a lens 12 is arranged close to the center of the front face of the imaging device 1, and a plurality of LEDs 11 are arranged as the illumination part so as to surround the periphery of the lens 12. It is to be noted that external illumination (ring illumination, or the like) may be provided separately from the imaging device 1

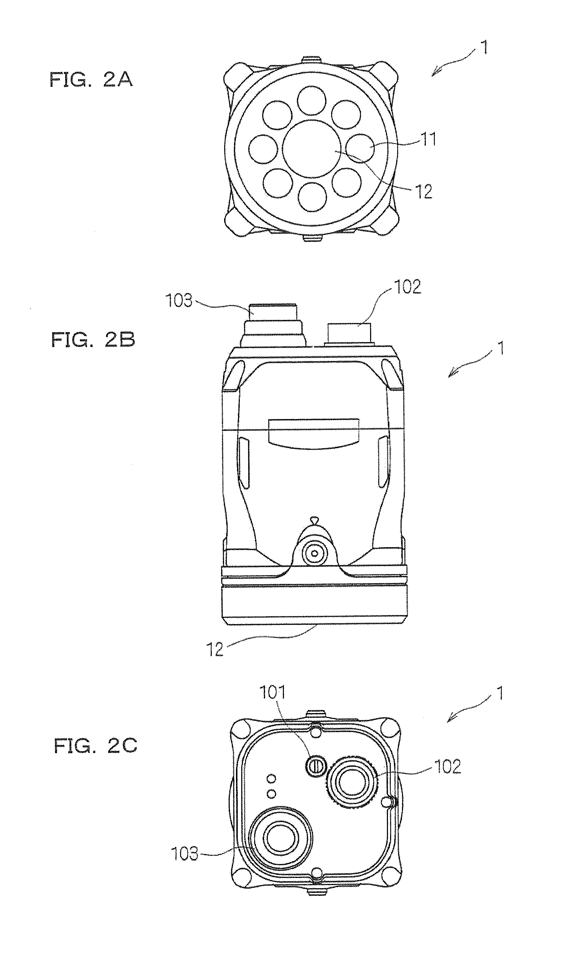

Figs. 2A to 2C are outline views showing a configuration of the imaging device 1 of the image processing sensor according to the embodiment of the present invention. Fig. 2A is a front view showing the configuration of the imaging device 1 of the image processing sensor according to the embodiment of the present invention, Fig. 2B is a plan view showing the configuration of the imaging device 1 of the image processing sensor according to the embodiment of the present invention, and Fig. 2C is a rear view showing the configuration of the imaging device 1 of the image processing sensor according to the embodiment of the present invention.

As shown in Fig. 2A, the lens 12 is arranged close to the center of the front face of the imaging device 1, and the plurality of LEDs 11 are arranged so as to surround the periphery of the lens 12. At the time of imaging, the plurality of LEDs 11 are turned on, to irradiate the inspection object with light, thereby allowing clear imaging of the inspection object.

As shown in Figs. 2B and 2C, the imaging device 1 includes, on its rear face, a power source connector 102 to be connected with a power cable that receives supply of electric power from an external power source, and a connection connector 103 connectable with the connection cable 3 that performs data communication with the display device 2. Further, the imaging device 1 also includes, on the rear face, a focus adjusting screw 101 capable of manually adjusting a focus.

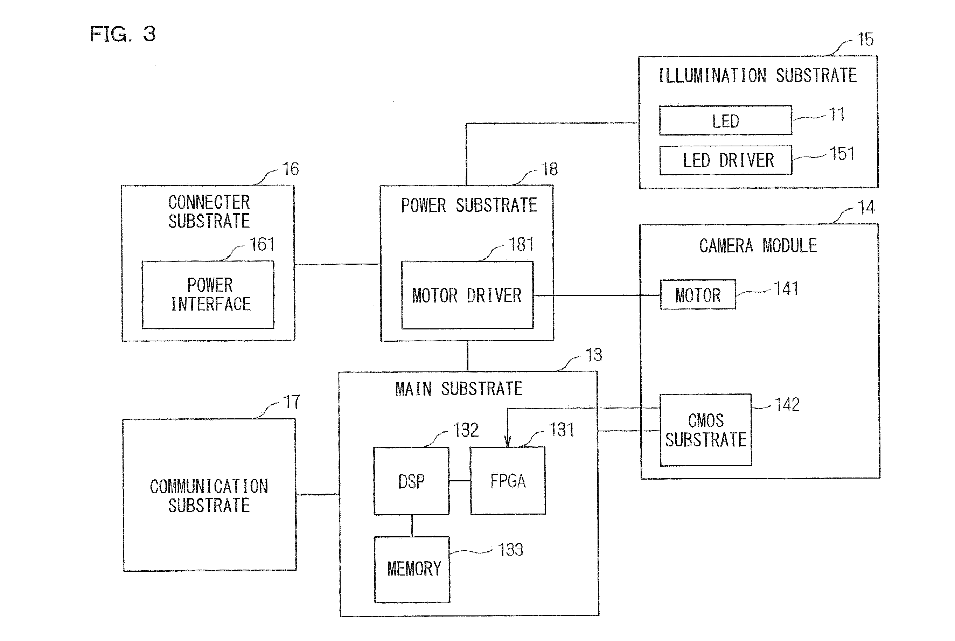

Fig. 3 is a block diagram showing a hardware configuration of the imaging device 1 of the image processing sensor according to the embodiment of the present invention. In Fig. 3, a connector substrate 16 receives supply of electric power from the external power source via the power source connector 102 (see Figs. 2B and 2C) provided in a power interface 161. A power substrate 18 supplies the supplied electric power to each substrate. In the present embodiment, electric power is supplied to a camera module 14 via a main substrate 13. A motor driver 181 of the power substrate 18 supplies drive electric power to a motor 141 of the camera module 14, to realize an auto focusing function.

A communication substrate 17 transmits to the display device 2 an OK/NG signal (determination signal) outputted from the main substrate 13 and indicating failure/non-failure of the inspection object in accordance with whether or not a defect has been detected. The display device 2 having received the determination signal displays a result of the determination.

An illumination substrate (illumination part) 15 is provided with the plurality of LEDs 11 for irradiating with light an imaged region where an inspection object is imaged, and a reflector (not shown) is provided in front of the LEDs 11. Further, the lens 12 is interchangeable as a lens unit for a short distance or a long distance.

In the camera module (imaging unit) 14, a motor 141 is driven, to thereby allow control of the auto focusing operation. The inspection object is imaged in accordance with an imaging instruction signal from the main substrate 13. In the present embodiment, a CMOS substrate 142 is provided as an imaging element, and an imaged color image is converted to an HDR image based on a conversion characteristic for expanding a dynamic range on the CMOS substrate 142, and is outputted to an FPGA 131 of the main substrate 13. That is, the CMOS substrate 142 is provided with a function to generate and output the HDR image, and for example, an HDRCMOS or the like corresponds to this. In the imaging device 1 of the image processing sensor, the switching portion may be provided for switching between whether or not to convert the image to the HDR image with the CMOS substrate. When a workpiece resistant to occurrence of halation and the like is carried in the case of imaging the inspection object, the switching portion can make switching so as not to generate the HDR image, and can further alleviate the arithmetic processing load.

The main substrate 13 controls an operation of each substrate having been connected therewith. For example, with respect to the illumination substrate 15, a control signal for controlling turning-on/off of the plurality of LEDs 11 is transmitted to an LED driver 151. The LED driver 151, for example, adjusts turning on/off, an amount of light, and the like, of the LEDs 11 in accordance with the control signal from the FPGA 131. Further, a control signal for controlling an auto focusing operation is transmitted to the motor 141 of the camera module 14 via a motor driver 181 of the power substrate 18, and an imaging instruction signal or the like is transmitted to the CMOS substrate 142.

While performing illumination control and imaging control, the FPGA 131 of the main substrate 13 executes image processing on the acquired image data (image processing unit). Further, a DSP 132 of the main substrate 13 executes edge detection processing, pattern search processing, and the like on the image data. As a result of the pattern search processing, an OK/NG signal (determination signal), indicating failure/non-failure of the inspection object in accordance with whether or not a defect has been detected is outputted to the communication substrate 17. A result of the arithmetic processing and the like are stored into a memory 133. In the present embodiment, processing with a relatively heavy load such as the edge detection processing and the pattern search processing are executed by the DSP 132. However, the processing may be executed by the FPGA 131 depending on the situation. In short, the image processing unit is sufficient as long as some kind of image processing can be executed on image data acquired by the CMOS substrate 142.

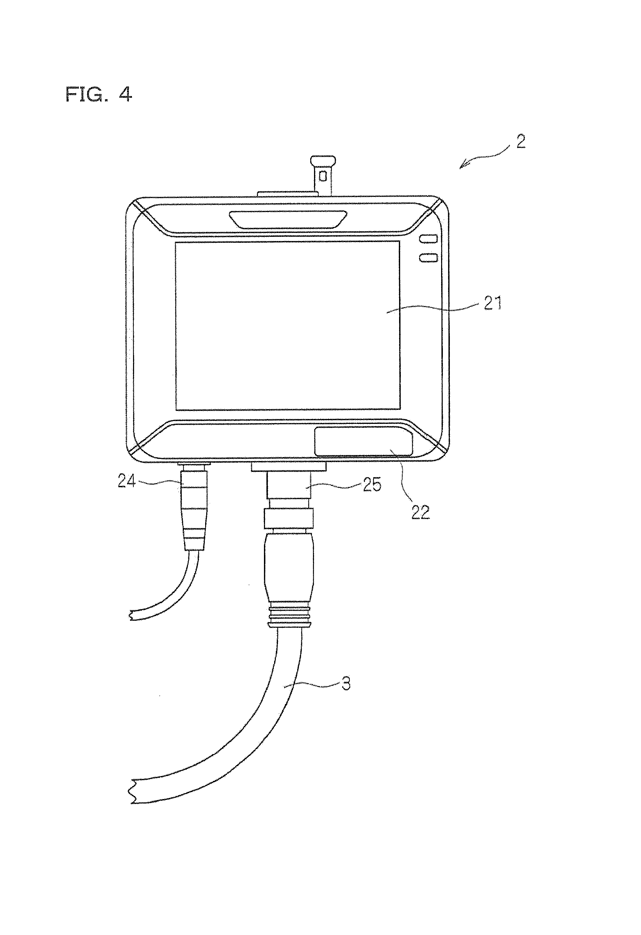

Fig. 4 is a front view showing a configuration of the display device 2 of the image processing sensor according to the embodiment of the present invention. As shown in Fig. 4, a touch panel 21 is provided at the center portion of the front face of the display device 2, and displays a color image of an imaged inspection object on the screen, while accepting a selection input by the user.

Further, the display device 2 is provided with a power connector 24 to be connected with the power cable supplied with electric power from the external power source, and a power connector 25 connectable with the connection cable 3 that performs data communication with the imaging device 1. Further, a USB port 22 connectable with a USB memory and the like is provided on the front face.

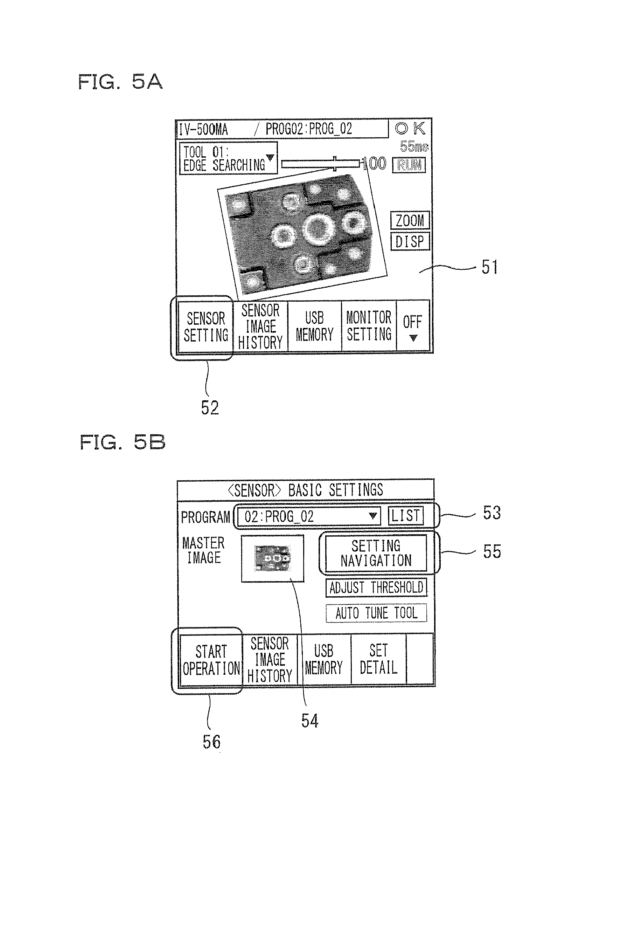

The user selects a button displayed on the screen of the touch panel 21 of the display device 2, to thereby control an operation of the image processing sensor. It is also possible to switch between "inspection mode" for executing an inspection of the inspection object and "setting mode" for performing a condition setting for the image processing sensor. In other words, the image processing sensor according to the present embodiment has a mode switching portion for switching between the inspection mode (Run mode) for determining failure/non-failure of the inspection object and the setting mode (Non-Run mode) for setting a variety of parameters (imaging parameter, illumination parameter, image processing parameter, and the like) which are used for the inspection. Figs. 5A and 5B are exemplary views of mode switching screens in the display device 2 of the image processing sensor according to the embodiment of the present invention.

Fig. 5A is an exemplary view of a screen display of "inspection mode". As shown in Fig. 5A, an image of the inspection object imaged by the imaging device 1 is displayed in an inspection object displaying region 51. A "SENSOR SETTING" button 52 at the lower left functions as the switching portion, and when the "SENSOR SETTING" button 52 is selected, the mode is switched to "setting mode", and the screen transitions to the screen shown in Fig. 5B.

Fig. 5B is an exemplary view of a screen display of "setting mode". As shown in Fig. 5B, the kind of the inspection object is selected in a program selecting region 53. Herein, the "program" means a series of data groups (combination of parameter values) set in accordance with the kind of the inspection object or the inspection environment, and a different data group can be stored as the program with respect to each kind of the inspection object.

Further, when a master image to become a reference for comparison with the inspection object is stored, the master image is displayed in a master image displaying region 54. When a "SETTING NAVIGATION" button 55 is selected, the screen transitions to a setting screen for performing detailed setting. A "START OPERATION" button 56 of Fig. 5B functions as the switching portion, and when the "START OPERATION" button 56 is selected, the mode is switched to "inspection mode", and the screen transitions to the screen shown in Fig. 5A.

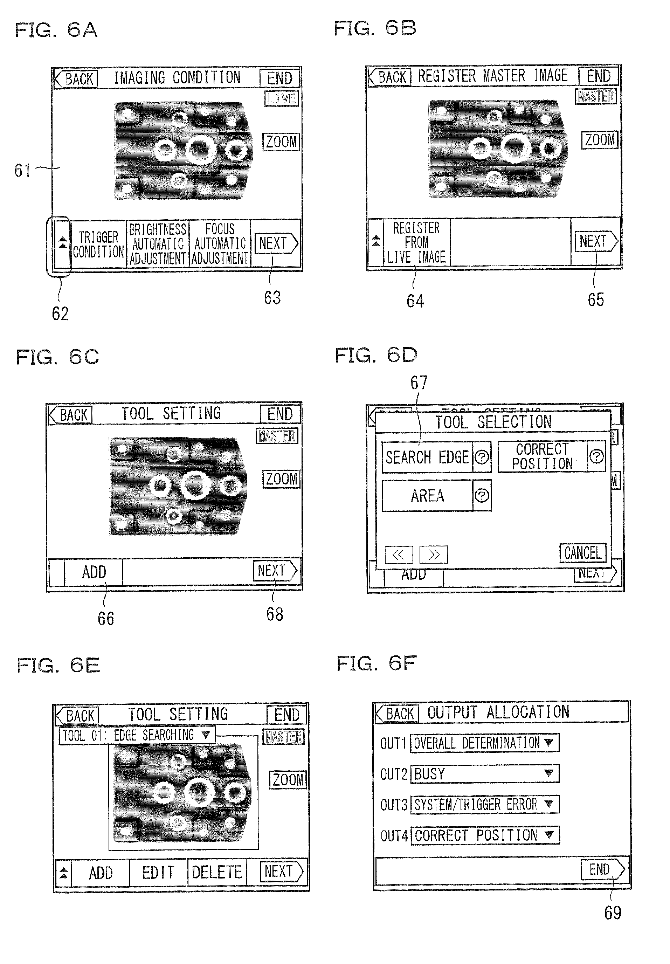

Figs. 6A to 6F are exemplary views of setting screens in the display device 2 of the image processing sensor according to the embodiment of the present invention. Through the setting screens shown in Figs. 6A to 6F, the user sequentially performs setting in the flow of setting of the imaging condition (Fig. 6A), registration of the master image to become a reference for pattern search (Fig. 6B), setting of a tool such as edge search on the master image (Figs. 6C to 6E), and allocation of an output (Fig. 6F). Hereinafter, a detailed description will be given. When the "SETTING NAVIGATION" button 55 shown in Fig. 5B is selected, first, an imaging condition setting screen shown in Fig. 6A is displayed. On the imaging condition setting screen, the master image is displayed in a main display region 61 when the master image is stored, and a setting button group for setting imaging conditions is displayed in the lower part of the screen. For example, when a "TRIGGER CONDITION" button is selected, it is possible to set a trigger condition for specifying a timing when the imaging device 1 images the inspection object. Although a detailed setting screen is omitted, when each button is selected, the setting screen is displayed on the touch panel 21 shown in Fig. 4 in accordance with each setting condition when each button is selected.

Further, for more detailed setting, an "EXTENDED FUNCTION" button 62 of Fig. 6A may be selected. When the "EXTENDED FUNCTION" button 62 is selected, a button for performing detailed setting is separately displayed. As described above, on the imaging condition setting screen, it is possible to adjust brightness, adjust focus, and set imaging range, on/off of illumination, on/off of zooming, and the like.

When a "screen transition" button 63, displayed as "NEXT", of Fig. 6A is selected, a master image registering screen shown in Fig. 6B is displayed. Hereinafter, a variety of tools for inspection will be set on the registered master image. A plurality of programs can be stored with respect to one master image. That is, different tools can be set with respect to the same master image, and can be previously stored as different programs.

As the master image, an image of the currently imaged inspection object may be registered, or an image selected from previously imaged images may be registered. In the case of registering the currently imaged image, the user may select the "REGISTER LIVE IMAGE" button 64. An image being imaged at the time of selection of the "REGISTER LIVE IMAGE" button 64 is registered as the master image.

When a "screen transition" button 65 displayed as "NEXT" of Fig. 6B is selected, a tool setting screen for each master image, shown in Fig. 6C, is displayed. Hereinafter, a variety of tools for inspection will be set on the master image.

On the tool setting screen, a tool for executing the inspection is additionally set in the displayed master image. When an "ADD" button 66 shown in Fig. 6C is selected, a tool selecting screen shown in Fig. 6D is displayed. A tool selected on the tool selecting screen is additionally set. For example, when a "SEARCH EDGE" button 67 is selected, an edge search setting screen shown in Fig. 6E is displayed. By previously setting which edge of the master image is to be checked with the imaged image of the inspection object on the edge search setting screen, it is possible to determine failure/non-failure of the inspection object in accordance with whether or not a defect has been detected. Hereinafter, a color area, positional correction, and the like can be set.

When a "screen transition" button 68 displayed as "NEXT" of Fig. 6C is selected, an output allocating screen, shown in Fig. 6F, is displayed. On the output allocating screen, it is possible to set what an output line means, the line being displayed on the screen as a result of the inspection. When an "END" button 69 is selected, the screen display returns to "setting mode" shown in Fig. 5B. In this manner, by sequentially selecting the "screen transition" buttons 63, 65, 68 displayed as "NEXT" on the touch panel 21 of the display device 2 shown in Fig. 4, the user can easily set in a short period of time a variety of parameters which are used for the inspection. Further, since even a user who is not used to the image processing sensor is guided to a next operation on the touch panel 21 of the display device 2, a variety of parameters can be easily set.

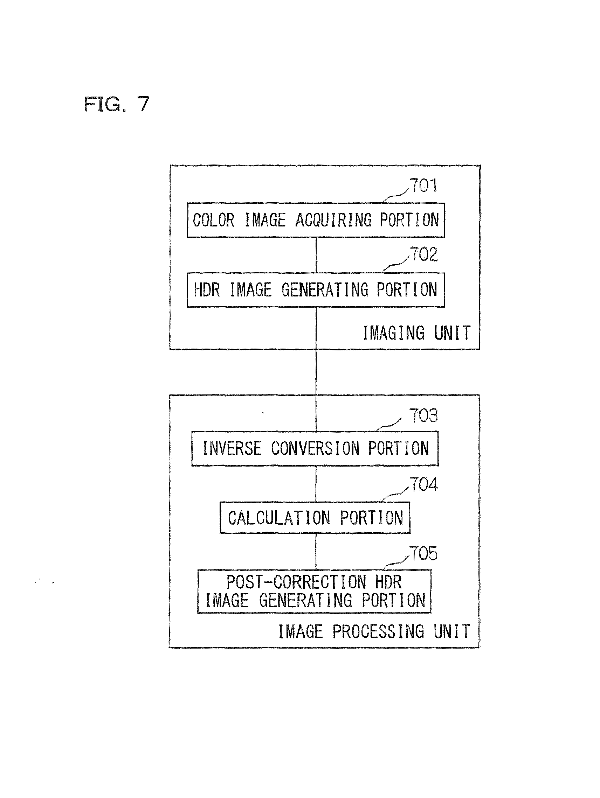

Fig. 7 is a function block diagram of the imaging device 1 of the image processing sensor according to the embodiment of the present invention. In Fig. 7, a color image acquiring portion 701 acquires, as color component values, pixel values of a color image imaged by the CMOS substrate 142 of the camera module 14 shown in Fig. 3. An HDR image generating portion 702 converts the acquired pixel values (color component values) of the color image based on the conversion characteristic for expanding the dynamic range, to generate an HDR image. Specifically, the HDR image generating portion 702 converts the pixel values to pixel values in accordance with the conversion characteristic with respect to each pixel.

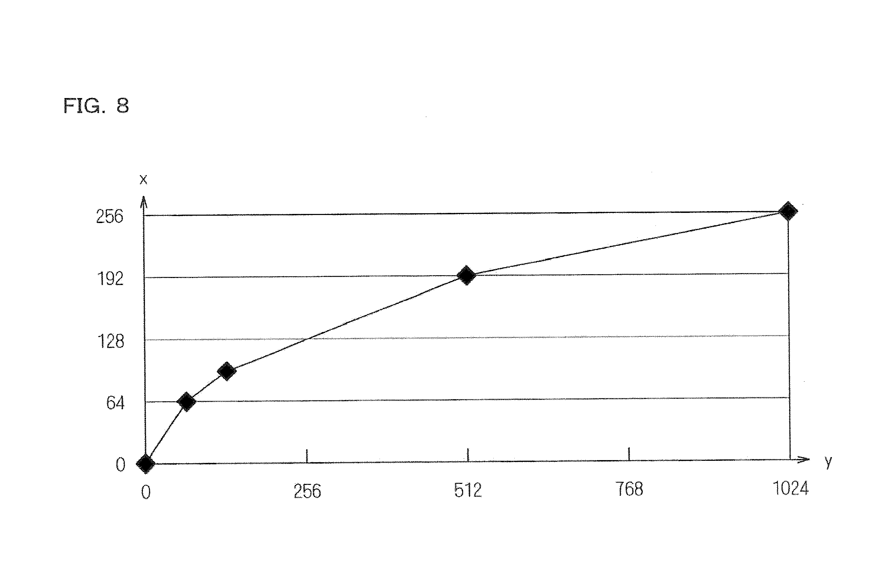

Fig. 8 is an exemplary view of a conversion characteristic for expanding a dynamic range. In Fig. 8, a vertical axis (x-axis) represents a pixel value (8 bits) after conversion and a horizontal axis (y-axis) represents a pixel value (10 bits) of an HDR image. The HDR image generating portion 702 converts a pixel value (color component value) y of the acquired color image to a pixel value (color component value) x in accordance with the conversion characteristic shown in Fig. 8. That is, a pixel value is converted based on a predetermined conversion characteristic (e.g. logarithmic characteristic) so as to expand a dynamic range (defined, for example, as a light-dark ratio between a highlight and shadow, a ratio between a minimum value and a maximum value of an identifiable signal, these ratios being represented by units of dB, or the like). Although the conversion characteristic as shown in Fig. 8 is used in the present embodiment, the present invention is not particularly limited to such a conversion characteristic and may, for example, be a conversion characteristic represented not by a broken line, but by a smooth curve.

Further, in the present embodiment, a CMOS substrate 142 is considered as an example of the color image acquiring portion 701 and the HDR image generating portion 702. That is, a CMOS substrate having a function to generate and output an HDR image is considered. In the field of the image processing inspection, since occurrence of halation or underexposure in an inspected image leads to deterioration in inspection accuracy, such a CMOS substrate having the function to generate and output an HDR image is typically used. Even in the case of using such a CMOS substrate, the image processing sensor according to the present embodiment can more accurately reproduce a chroma, a hue, and the like of the surface of the inspection object. That is, the image processing sensor according to the present embodiment can more accurately reproduce the chroma, the hue, and the like of the surface of the inspection object, while preventing deterioration in inspection accuracy.

Returning to Fig. 7, an inverse conversion portion 703 inversely converts the color component values with respect to each pixel of the HDR image generated with the HDR image generating portion 702 based on the conversion characteristic. Although an original image should principally be reproduced by inverse conversion, the obtained image is in effect not completely the same as the imaged color image due to the existence of a round-off error or the like.

A calculation portion 704 calculates brightness and a ratio of respective color component values with respect to each pixel from the inversely converted pixel values. In the present embodiment, a maximum value of the color component values is calculated as the brightness, and a ratio of the brightness and the respective color component values with respect to each pixel is values obtained by dividing the respective color component values by the calculated brightness. It is thereby possible to obtain the ratio of the brightness and the respective color component values as values in the range of 0 to 1, and further to seek alleviation of an arithmetic processing load, efficient use of a memory resource, and the like. However, the present invention is not limited thereto, and for example, a total value obtained by adding up the color component values may be regarded as the brightness.

A post-correction HDR image generating portion 705 converts the calculated brightness based on the conversion characteristic, to reconvert it to the brightness in the HDR image. The calculated ratio of the respective color component values is multiplied by the reconverted brightness, to generate a post-correction HDR image. In the present embodiment, when generating the post-correction HDR image, there has been adopted the calculating method of multiplying the calculated ratio of the respective color component values by the reconverted brightness, but the present invention is not limited thereto.

Hereinafter, a more detailed description will be given by use of specific numeral values. It is assumed, for example, that in a case where the color component values of the color image imaged by the CMOS substrate 142 are respectively R, G, B, the FPGA 131 of the main substrate 13 is provided with R', G', B' having been converted to the HDR image. The FPGA 131 inversely converts R', G', B' having been converted to the HDR image, to thereby calculate color component values RL, GL, BL with respect to each pixel.

Herein, brightness VL is calculated as a maximum value of the color component values RL, GL, BL with respect to each pixel, and hence a ratio of the brightness and the respective color component values can be represented as RL/VL, GL/VL, BL/VL. Since the brightness VL is a value inversely converted from the HDR image, it is converted to the HDR image again, to obtain brightness V. Accordingly, the color component values with respect to each pixel can be represented, using the reconverted brightness V, as RL/VL × V, GL/VL × V, BL/VL × V.

For example, as specific numeral values, when the color component values of the image before HDR conversion are: (R, G, B) = (768, 196, 96), a chroma S is: (768 - 96)/768 = 0.875. When the color component values in this state are converted to the HDR image in accordance with the conversion characteristic shown in Fig. 8, they become: (R, G, B) = (224, 113, 80). When these values are held, the chroma S becomes: (224 - 80)/224 = 0.643, causing a change in tone of color, such as a color becoming grayish, or a color becoming as if it is faded due to a decreased chroma.

As opposed to this, in the case of performing color correction on the HDR image as in the present embodiment, when the color component values of the image before HDR conversion are: (R, G, B) = (768, 196, 96) as in the foregoing example, the RGB ratio is obtained as 8:2:1. Since the brightness V is 768, which is the same as in the case of not performing color correction, R becomes 224 when values are converted in accordance with the conversion characteristic shown in Fig. 8. Hence the values become: (R, G, B) = (224, 56, 28) in accordance with the obtained RGB ratio. In this case, the chroma S is: (224 - 28)/224 = 0.875, remaining unchanged, and the hue H also remains unchanged. Accordingly, with the effect of the color correction being exerted only on the brightness V, the overall image does not become faded.

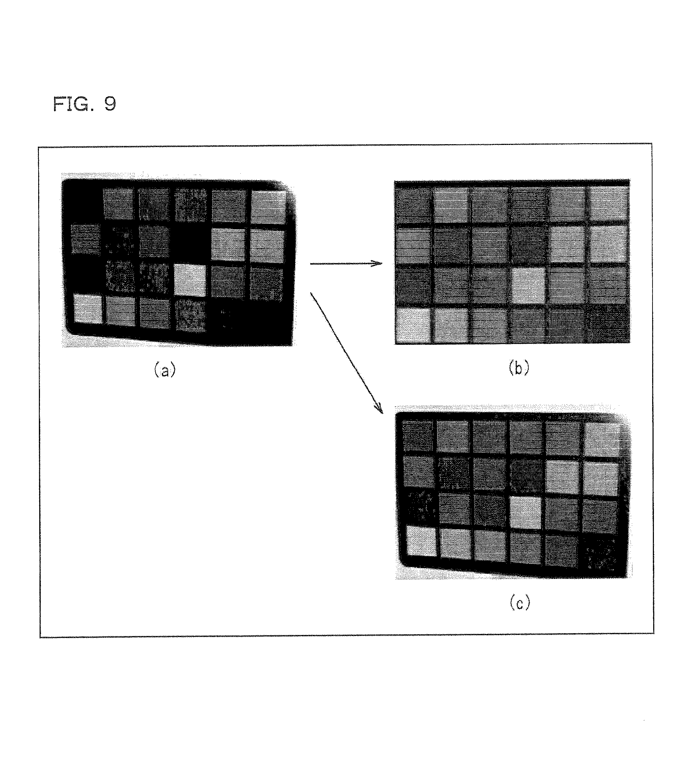

Figs. 9A to 9C are views showing changes in state of a color image imaged by the imaging device 1. As shown in Fig. 9A, in the case of not generating an HDR image, borders of colors are indistinctly displayed. In the case of generating the HDR image, as shown in Fig. 9B, when color correction is not performed on the HDR image as shown in Fig. 9B, the generated post-correction HDR image has a decreased chroma S, to become an image as if it is faded. On the other hand, performing color correction on the HDR image as shown in Fig. 9C makes a chroma and a hue of the generated post-correction HDR image almost the same as a chroma and a hue of the imaged color image. Hence, the image is not faded, and deterioration in defect detection accuracy in the inspection can be prevented.

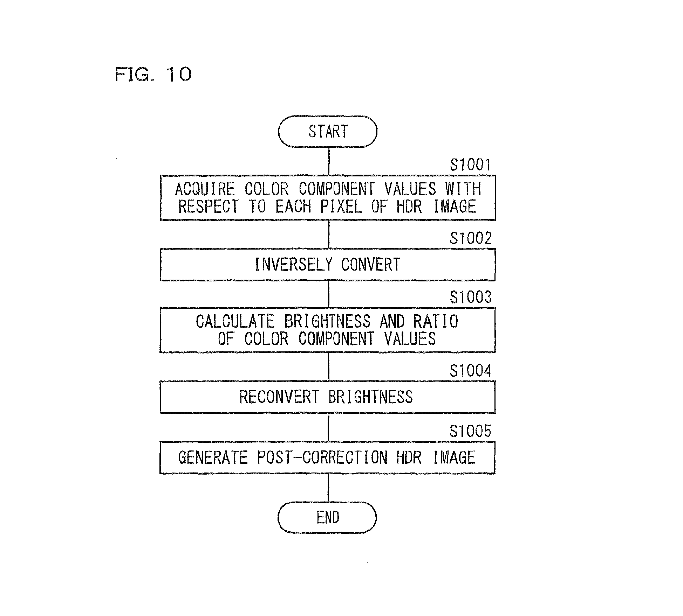

Fig. 10 is a flowchart showing a procedure for the FPGA 131 of the main substrate 13 in the imaging device 1 of the image processing sensor according to the embodiment of the present invention. In Fig. 10, the FPGA 131 of the main substrate 13 of the imaging device 1 acquires color component values with respect to each pixel of an HDR image converted and generated by the camera module 14 (step S1001).

The FPGA 131 inversely converts the acquired color component values with respect to each pixel of the HDR image based on the conversion characteristic (step S1002). The FPGA 131 calculates brightness and a ratio of respective color component values with respect to each pixel from the inversely converted pixel values (step S1003). In the present embodiment, a maximum value of the color component values is calculated as the brightness, and a ratio of the brightness and the respective color component values with respect to each pixel is values obtained by dividing the respective color component values by the calculated brightness. It is thereby possible to obtain the ratio of the brightness and the respective color component values as values in the range of 0 to 1.

The FPGA 131 converts the calculated brightness based on the conversion characteristic, to reconvert it to the brightness in the HDR image (step S1004). The FPGA 131 multiplies the calculated ratio of the respective color component values by the reconverted brightness, to generate a post-correction HDR image (step S1005).

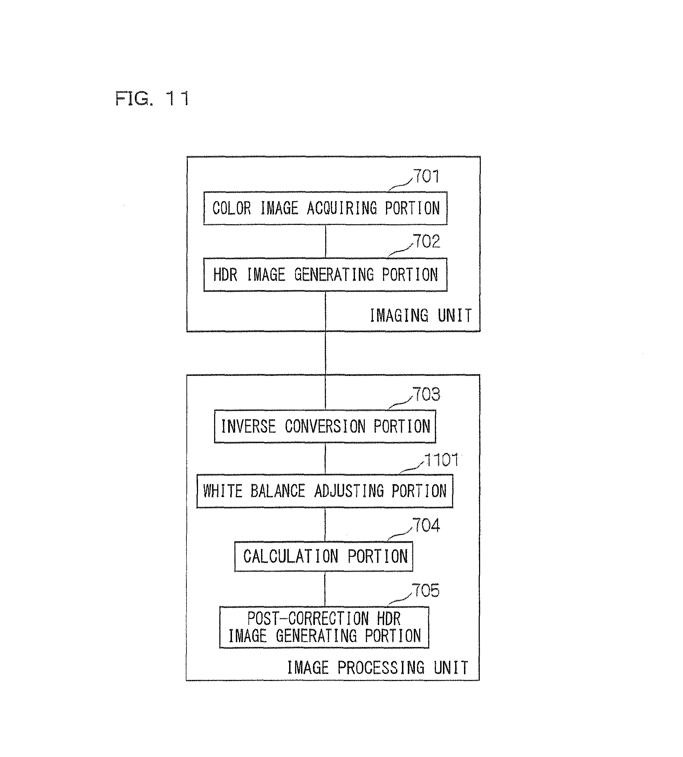

In order to display a white color as a white color, adjustment of white balance of the respective color component values R, G, B is required. Fig. 11 is a function block diagram of the imaging device 1 of the image processing sensor according to the embodiment of the present invention in the case of adjusting white balance. In Fig. 11, since the color image acquiring portion 701 and the HDR image generating portion 702 are similar to those in the case of not adjusting white balance, a detailed description thereof will be omitted.

The inverse conversion portion 703 inversely converts color component values with respect to each pixel of the HDR image generated by the HDR image generating portion 702 based on the conversion characteristic. Although an original image should principally be reproduced by the inverse conversion, the obtained image is in effect not completely the same as the imaged color image due to the existence of a round-off error or the like.

A white balance adjusting portion 1101 multiplies the inversely convert pixel values (color component values) with respect to each pixel by gains for adjusting white balance. The calculation portion 704 calculates brightness and a ratio of respective color component values with respect to each pixel from the pixel values multiplied by the gains. In the present embodiment, a maximum value of the color component values is calculated as the brightness, and a ratio of the brightness and the respective color component values with respect to each pixel is values obtained by dividing the respective color component values by the calculated brightness. It is thereby possible to obtain the ratio of the brightness and the respective color component values as values in the range of 0 to 1.

A post-correction HDR image generating portion 705 converts the calculated brightness based on the conversion characteristic, to reconvert it to the brightness in the HDR image. The ratio of the respective color component values is multiplied by the reconverted brightness, to generate a post-correction HDR image.

For example, in a case where the color component values of the color image imaged by the CMOS substrate 142 are respectively R, G, B, the FPGA 131 of the main substrate 13 is provided with color component value R', G', B' having been converted to the HDR image. The FPGA 131 inversely converts the color component values R', G', B' having been converted to the HDR image, to thereby calculate color component values RL, GL, BL with respect to each pixel.

Next, the calculated color component values RL, GL, BL with respect to each pixel are multiplied by gains (AR, AG, AB) for adjusting white balance. Therefore, the color component values with respect to each pixel after adjustment of white balance are: (RL × AR, GL × AG, BL × AB).

Herein, brightness VL is calculated as a maximum value of the color component values RL × AR, GL × AG, BL × AB with respect to each pixel, and hence a ratio of the brightness and the respective color component values can be represented as RL × AR/VL, GL × AG/VL, BL × AB/VL. Since the brightness VL is a value inversely converted from the HDR image, it is converted to the HDR image again, to obtain brightness V. Accordingly, the color component values with respect to each pixel can be represented, using the reconverted brightness V, as RL × AR/VL × V, GL × AG/VL × V, BL × AB/VL × V.

In the case of not performing conversion to the HDR image, the color component values are: (R, G, B) = (160, 200, 100), and multiplied by the gains (AR, AG AB) = (1.25, 1.00, 2.00) for adjusting white balance. Hence, the color component values are: (R, G, B) = (200, 200, 200), resulting in a white display. In the case of conversion to the HDR image, when color component values with the same RGB ratio: (R, G, B) = (320, 400, 200) are converted in accordance with the conversion characteristic shown in Fig. 8, the color component values become: (R, G, B) = (144, 164, 114). When these values are multiplied by the gains (1.25, 1.00, 2.00), (R, G, B) = (180, 164, 228) are obtained, and hence a white color cannot be displayed as a white color.

As opposed to this, in the case of performing color correction on the HDR image to adjust white balance as in the present embodiment, when the color component value of the HDR image are: (R, G, B) = (144, 164, 114), the values are inversely converted in accordance with the conversion characteristic shown in Fig. 8, to become: (R, G, B) = (320, 400, 200). These are multiplied by the gains (AR, AG, AB) = (1.25, 1.00, 2.00) for adjusting white balance, to be: (R, G, B) = (400, 400, 400), and thereby converted in accordance with the conversion characteristic shown in Fig. 8, to become: (R, G, B) = (164, 164, 164). Hence, a white color can be reliably displayed as a white color.

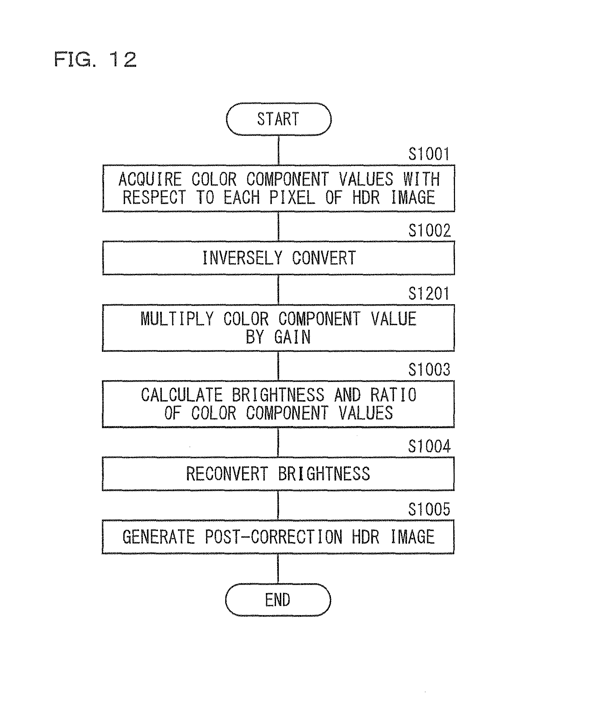

Fig. 12 is a flowchart showing a procedure for the FPGA 131 of the main substrate 13 in the imaging device 1 of the image processing sensor according to the embodiment of the present invention in the case of adjusting the white balance. In Fig. 12, the FPGA 131 of the main substrate 13 of the imaging device 1 acquires color component values with respect to each pixel of an HDR image converted and generated with the camera module 14 (step S1001).

The FPGA 131 inversely converts the acquired color component values with respect to each pixel of the HDR image based on the conversion characteristic (step S1002). FPGA 131 multiplies the inversely converted pixel values (color component values) with respect to each pixel by gains for adjusting white balance (step S1201), and calculates brightness and a ratio of the color component values with respect to each pixel from pixel values (color component values) multiplied by the gains (step S1003). In the present embodiment, a maximum value of the color component values is calculated as the brightness, and a ratio of the brightness and the respective color component values with respect to each pixel is values obtained by dividing the respective color component values by the calculated brightness. It is thereby possible to obtain the ratio of the brightness and the respective color component values as values in the range of 0 to 1.

The FPGA 131 converts the calculated brightness based on the conversion characteristic, to reconvert it to the brightness in the HDR image (step S1004). The FPGA 131 multiplies the ratio of the respective color component values by the reconverted brightness, to generate a post-correction HDR image (step S1005).

As described above, according to the present embodiment, since a chroma and a hue of the generated post-correction HDR image are almost the same as a chroma and a hue of the imaged color image, it is possible to correct only the brightness, and deterioration in image quality can be suppressed. Further, it is possible to suppress deterioration in image quality despite generation of an HDR image in one imaging of the color image similar to that in the case of imaging for a plurality of times with a plurality of different exposure times, and also possible to reduce an amount of data communication between the imaging unit and the image processing unit, to thereby reduce the inspection cycle time.

In addition, the present invention is not limited to the above example, and a variety of changes, modifications and the like can be made as long as it is within the scope of the gist of the present invention. For example, the imaging device 1 and the display device 2 are not limited to the form of being directly connected through the connection cable 3, and needless to say, the imaging device 1 and the display device 2 may be connected via a network such as LAN, WAN, or the like. Further, although the imaging device 1 and the display device 2 are separated bodies in the above embodiment, an image processing apparatus obtained by unifying the imaging device 1 and the display device 2 may also be used.

## Claims

1. An image processing apparatus, comprising:
an imaging unit having an imaging element for imaging an inspection object; and
an image processing unit for executing image processing on image data captured by the imaging unit, wherein
the imaging unit converts a color image imaged by the imaging element to an HDR image based on a conversion characteristic for expanding a dynamic range, to output the HDR image, and
the image processing unit includes
an inverse conversion portion for inversely converting color component values with respect to each pixel of the HDR image, outputted from the imaging unit, based on the conversion characteristic,
a calculation portion for calculating brightness and a ratio of the color component values with respect to each pixel, from the inversely converted color component values, and
a post-correction HDR image generating portion for converting the calculated brightness based on the conversion characteristic, to generate a post-correction HDR image based on a ratio of the converted brightness and the calculated color component values.

2. The image processing apparatus according to claim 1, wherein
the calculation portion calculates a maximum value of the color component values as the brightness, and
the post-correction HDR image generating portion converts the brightness calculated with respect to each pixel based on the conversion characteristic, and multiplies the calculated ratio of the color component values by the converted brightness, to generate the post-correction HDR image.

3. The image processing apparatus according to claim 1, wherein the image processing unit includes a white balance adjusting portion for multiplying the color component values with respect to each pixel of the HDR image, inversely converted by the inverse conversion portion, by gains for adjusting white balance.

4. The image processing apparatus according to claim 1, comprising a switching portion for switching between whether or not to convert the HDR image in the imaging unit.

5. An image processing method executed by an image processing apparatus, the apparatus including:
an imaging unit having an imaging element for imaging an inspection object; and
an image processing unit for executing image processing on image data acquired by the imaging unit, wherein
the imaging unit converts a color image imaged by the imaging element to an HDR image based on a conversion characteristic for expanding a dynamic range, to output the HDR image, and
the image processing unit
inversely converts color component values with respect to each pixel of the HDR image outputted from the imaging unit, based on the conversion characteristic,
calculates brightness and a ratio of the color component values with respect to each pixel from the inversely converted color component values, and
converts the calculated brightness based on the conversion characteristic, to generate a post-correction HDR image based on a ratio of the converted brightness and the calculated color component values.

6. The image processing method according to claim 5, wherein
a maximum value of the color components is calculated as the brightness,
the brightness calculated with respect to each pixel is converted based on the conversion characteristic, and
the calculated ratio of the color component values is multiplied by the converted brightness, to generate the post-correction HDR image.

7. The image processing method according to claim 5, wherein the image processing unit multiplies the color component values with respect to each pixel of the inversely converted HDR image by gains for adjusting white balance.

8. The image processing method according to claim 5, wherein switching between whether or not to convert the HDR image in the imaging unit is made.
